Europäisches Patentamt

European Patent Office

Office européen des brevets

(11) Numéro de publication: **0 249 560**

**A1**

(12) # DEMANDE DE BREVET EUROPEEN

(21) Numéro de dépôt: 87401318.8

(22) Date de dépôt: 11.06.87

(51) Int. Cl.4: **B 60 R 13/06**

(30) Priorité: 12.06.86 FR 8608482

(43) Date de publication de la demande:
16.12.87 Bulletin 87/51

(84) Etats contractants désignés: **DE IT**

(71) Demandeur: **LE PROFIL**
**105, rue Jean Jaurès**
**F-78130 Les Mureaux (FR)**

(72) Inventeur: **Joguet, Alain**
**39, rue Duguay**
**F-95100 Argenteuil (FR)**

(74) Mandataire: **Polus, Camille et al**
**c/o Cabinet Lavoix 2, Place d'Estienne d'Orves**
**F-75441 Paris Cedex 09 (FR)**

(54) **Entourage de vitre collée et notamment de vitre fixe de véhicule automobile.**

(57) Cet entourage comporte un profilé (8) de section en U, en matière organique dure, qui chausse le chant de la vitre (1) et comporte sur la face opposée une languette (14) parallèle à la base (16) du U, et munie comme cette base de dents (20) de retenue d'une tige (24) solidaire d'un profilé de fermeture et de décoration (26). Une lèvre (28) de ce profilé (26) part de la tige (24), recouvre l'espace entre la vitre et la carrosserie et prend appui sur cette dernière. La lèvre (28) est souple et peut être soulevée pour permettre d'atteindre la carrosserie et/ou d'écarter la languette (14) pour liberer le profilé (26) en vue du retrait de la vitre.

FIG.1

EP 0 249 560 A1

**Description**

Entourage de vitre collée et notamment de vitre fixe de véhicule automobile

La technique de la vitre collée est de plus en plus appréciée pour la fixation des vitres fixes et notamment des pare-brises ou lunettes de véhicules automobiles. Toutefois, cette technique oblige à prevoir sur tout le pourtour de la vitre un entourage assurant à la fois la protection du bord de la vitre et la fermeture de l'espace compris entre le chant de la vitre et le rebord de la carrosserie.

On a utilisé dans ce but des joints en caoutchouc ou analogue s'appuyant à la fois sur le chant de la vitre et sur la carrosserie. Malheureusement ces joints ne pouvaient pas adopter le rayon des vitres lorsque celui-ci était trop petit de sorte que les constructeurs étaient obligés d'ajouter des raccordements angulaires, ce qui compliquaient la réalisation. En outre, le joint était systématiquement détruit lors d'un changement de vitre.

Ces joints ont donc, dans certains cas, été remplacés par des entourages en deux parties comprenant un profilé métallique d'emboîtement sur la vitre et un joint en matière synthétique ou autre de fermeture de l'espace entre la vitre et la carrosserie. Toutefois, le profilé métallique doit pour s'adapter réellement au contour de la vitre être cintré préalablement ou comporter des évidements appropriés permettant de le cintrer au montage. Par ailleurs, les moyens d'accrochage du joint plastique sur le profilé se trouvant généralement sur la face extérieure de la vitre, l'entourage présente un encombrement préjudiciable au moins à l'esthétique de l'ensemble.

Une autre entourage de vitre fixe, (FR-A-2 565 621), comporte un profilé d'emboîtement en matière organique dure, ayant une section en U et muni d'une languette d'accrochage sensiblement parallèle à la base de ce U, et un profilé de fermeture qui comporte une tige d'accrochage, s'emboîtant entre la languette et la base du U, et une lèvre de fermeture en une matière organique souple.

Un tel entourage s'adapte facilement à toutes formes de vitre mais peut difficilement être démonté sans déterioration. En outre, le profilé de fermeture formant enjoliveur comporte également une lèvre de recouvrement du profilé d'emboîtement et cette lèvre à tendance à se soulever et à vibrer sous l'action de l'écoulement de l'air, ce qui est une source de bruit et une cause détérioration de l'ensemble.

La présente invention a pour but de remédier à ces inconvénients en fournissant un entourage en deux parties qui puisse facilement être démonté, et présente à la fois un encombrement faible, un aspect agréable et une bonne résistance à l'air.

Cette invention a donc pour objet un entourage de vitre du type ci-dessus qui comporte les caractéristiques mentionnées dans la revendication 1.

De par sa nature et sa forme le profilé d'emboîtement, muni de la couche de matière souple, tout en s'adaptant facilement sur le pourtour d'une vitre quelle que soit la courbure à adopter, assure une étanchéité efficace sans risque d'apparition de vibrations, et, en combinaison avec le profilé de fermeture qui s'étend au-dessus de l'espace entre la vitre et la carrosserie en, un aspect agréable à l'ensemble. En outre, la coopération de la tige d'un profilé et de la languette de l'autre est telle qu'elle permet non seulement un encliquetage facile de ces deux organes mais, également, un retrait éventuel.

La description ci-dessous de modes de réalisation donnés à titre d'exemples non limitatifs et représentée aux dessins annexés, fera d'ailleurs ressortir les avantages et caractéristiques de l'invention.

Sur ces dessins :

    - la Fig. 1 est une vue en coupe transversale d'un entourage selon l'invention monté sur une vitre collée de véhicule automobile ;

    - la Fig. 2 est une vue analogue à la Fig.1 d'un entourage selon une variante de réalisation au cours de son assemblage ;

    - la Fig. 3 est une vue analogue à la Fig. 2 de l'entourage monté.

L'entourage objet de l'invention est destiné à être monté autour d'une vitre 1 fixé par exemple au moyen d'un ruban de colle 2 dans une feuillure 4, et notamment dans une feuillure de la carrosserie d'un véhicule automobile, un espace 6 restant libre entre la vitre 1 et cette feuillure 4.

Sur tout le pourtour de la vitre 1 est monté un profilé 8 de section en U, qui est réalisé en une matière organique telle qu'une matière plastique ou un caoutchouc, relativement dure et dont les branches 10 et 12 tendent à converger l'une vers l'autre à la manière des branches d'une pince, de sorte, qu'elles serrent la vitre 1 entre elles. Sur sa face opposée aux branches 10 et 12 le profilé 8 comporte une languette 14 qui est sensiblement parallèle à la base 16 du U et est reliée par un bras élastique 18 à la branche interne 10, c'est à dire à la branche que se trouve à proximité du ruban de collage 12.

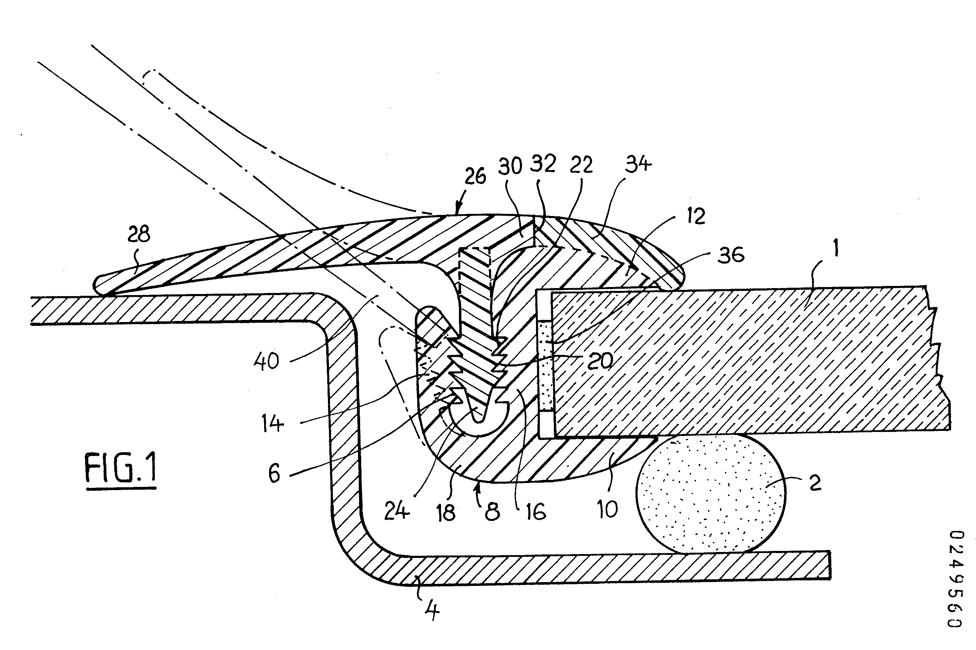

Dans le mode de réalisation représenté sur la Fig. 1 la languette 14 et la base 16 du U comportent sur leur face en regard des dents inclinées 20 qui coopèrent avec des dents analogues 22 portées par une tige 24 d'un profilé de fermeture 26.

La tige 24 qui est réalisée en une matière organique dure, est solidaire d'une lèvre de fermeture 28, en une matière organique souple, qui s'étend d'un côté de la tige 24 à partir de l'extrémité de celle-ci opposée aux dents 22 et a une longueur suffisante pour venir reposer sur la carrosserie 4 au delà de l'espace 6 qui est ainsi fermé et protégé contre l'humidité extérieur, les projections de poussière et autre. De l'autre côté de la tige 24 le profilé 26 comporte un bord 30 qui vient en butée contre un épaulement 32 de la branche 12 du profilé d'emboîtement 8 et a une forme complémentaire de celle de ce profilé.

La branche 12 est de préference revêtue sur sa face externe d'une couche 34 d'une matière organique souple analogue à celle qui constitue la partie exterieure du profilé de fermeture 26. En outre, les courbures de cette couche 34 et du profilé de fermeture 26 s'épousent étroitement de sorte que les deux profilés présentent une surface externe continue. De préférence, la couche de matière souple 34 se prolonge légèrement au-delà de l'extrémité libre de la branche 12 de sorte qu'elle vient en appui contre la vitre 1 et assure l'étanchéité à l'air du serrage du profilé 8 sur cette vitre.

Grâce à la nature du matériau qui constitue les profilés ainsi qu'a leur forme la mise en place de l'entourage s'effectue de manière extrémement simple. Le profilé d'emboîtement 8 est d'abord monté sur le chant de la vitre 1 par déroulement sur la périphérie de cette vitre, sa section et sa matière lui permettant d'épouser convenablement les rayons des coins de la vitre sans que les branches 10 et 12 n'ondulent. Un ruban de mastic adhésif ou autre 36 peut éventuellement être intercalé entre le chant de la vitre et le fond du profilé 8.

Le profilé de fermeture 26 est ensuite monté sur le profilé 8 en introduisant la tige 24 dans l'espace qui sépare la languette 14 et la base 16 jusqu'à l'interpénétration des dents 20 et 22 de ces organes. Le bord 30 s'appui alors étroitement sur la partie externe du profilé 8 et sur l'épaulement 32, et les deux profilés 8 et 26 sont solidaires l'un de l'autre. Leur tenue est d'ailleurs renforcée au droit des courbures de la vitre du fait même du cintrage du profilé car en ces points la languette 14 à tendance à exercer une plus grande pression sur la tige 24.

La lèvre 28 assure à la fois la fermeture étanche de la feuillure de la carrosserie et la décoration de l'entourage de la vitre 1. En effet, cette lèvre peut être réalisée en différentes couleures et/ou comporter sur sa surface des liserès de couleurs différentes ou d'autres ornements.

Cette lèvre 28 peut par ailleurs être soulevée pour permettre d'atteindre la feuillure, par exemple lorsqu'un raccord de peinture est nécessaire après la pose de la vitre 1. La souplesse de la lèvre 28 lui permet de reprendre sa position de fermeture étanche dès qu'elle est relâchée.

De la même manière l'ensemble du profilé 26 peut être retiré lorsqu'on le désire en introduisant un outil fin tel qu'une lame de couteau, un tournevis ou analogue 40 sous la lèvre 28 jusqu'à atteindre la languette 14. Cette languette 14 est alors écartée de la tige 24, comme indiqué en traits interompus sur la Fig. 1, ce qui libère la tige 24 et permet le retrait sans détérioration de l'ensemble du profilé 26. Ce profilé peut donc être réutilisé lorsque la vitre 1 a été réparée ou remplacée.

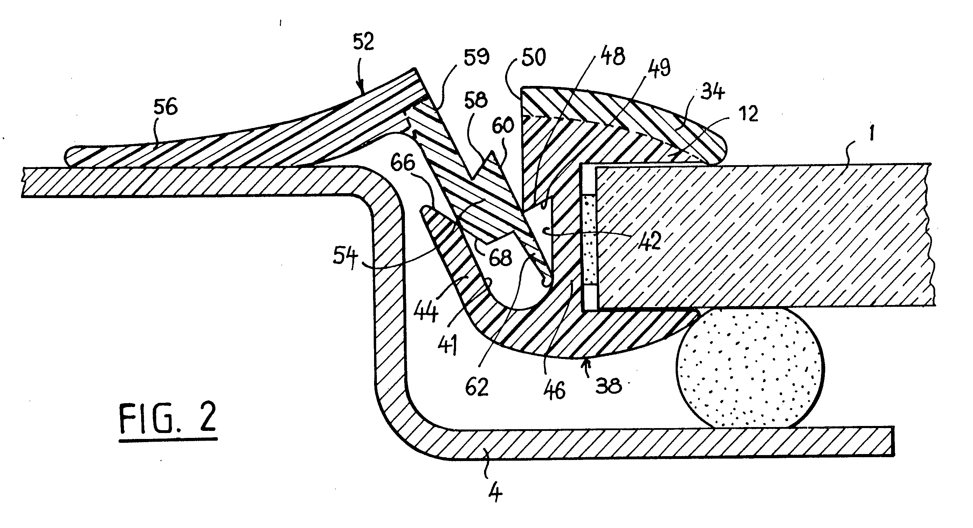

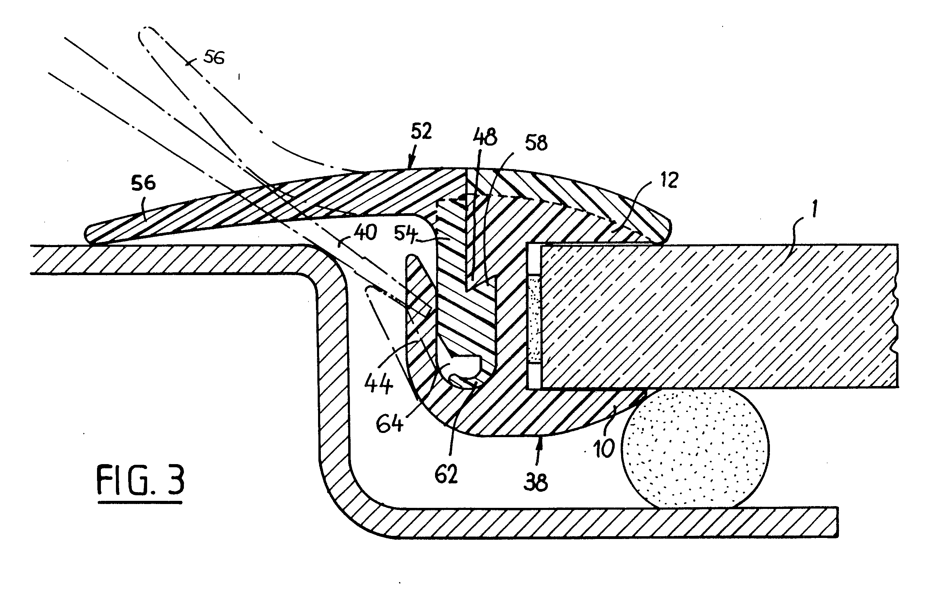

Selon une variante de réalisation représentée sur les Fig. 2 et 3, le profilé 38 d'emboîtement sur la vitre 1 ne comporte pas de dents de sorte que les surfaces en regard, 41 et 42 respectivement, de la languette 44 est de la base 46 du profilé 38 sont lisses. La base 46 comporte toutefois, une dent 48 qui est délimitée par une surface inclinée 49 reliant la surface lisse 42 à une surface 50 qui lui est parallèle, le profilé ayant une épaisseur accrue à partir de la dent 48 sur toute la hauteur de la branche 12. Par ailleurs la couche de matière souple 34 s'étend sur toute la longueur de la branche 12 et vient dans le prolongement de la surface 50.

Le profilé de fermeture 52 a de la même manière que le profilé 26 de la Fig. 1 du côté opposé à la lèvre 56 une forme complémentaire de celle du profilé d'emboîtement 38. Par suite la tige 54 comporte une dent 58, de même profondeur que la dent 48, qui est délimitée, comme elle, entre deux surfaces parallèles respectivement 59 et 60. La tige 54 est par ailleurs munie d'une lèvre souple 62 disposée dans le prolongement de la surface 60, comme le montre plus particulièrement la Fig. 2.

Lors de l'introduction de la tige 54 dans le logement 64 ménagé entre la languette 44 et la base 46 du profilé 38, la lèvre 62 vient en butée contre ce profilé puis est recourbée en épousant la forme du fond du logement 64 (Fig. 3). Son élasticité s'ajoute alors à celle de la languette 44 pour bloquer la tige 54 contre le profilé 38 et tout particulièrement la dent 58 contre la dent 48, comme le montre la Fig. 3.

Bien entendu, en regard de la languette 44 la tige 54 présente une surface lisse assurant un bon contact avec cette languette.

Dans tous les cas la languette 14, 44 est de préférence biseautée en 66 à son extrémté de façon à faciliter l'introduction de la tige 24 ou 54 dans le logement 64. La tige a en outre de préférence, également une extrémtié biseautée. Par exemple dans le mode de réalisation de la Fig. 1 la tige 24 est terminée par une extrémité pointue, tandis que dans le mode de réalisation des Fig.2 et 3, elle comporte un biseau 68 qui glisse sur celui de la languette 44.

La mise en place du profilé 52 s'effectue de la même manière que celle du profilé de fermeture 26 et il peut également être retiré en écartant la languette 44 au moyen d'un outil 40 qui soulève en même temps la lèvre souple 56. Le profilé 52 peut alors basculer de façon à faire glisser la dent 58 sur la dent 48 du profilé d'emboîtement jusqu'à son dégagement. A ce moment la lèvre souple 62 qui a été écrasée par le déplacement précédent repousse la tige d'accrochage vers l'extérieur pour reprendre sa forme rectiligne initiale. Le retrait s'effectue ainsi sans que le profilé soit détérioré, de sorte qu'il peut être réutilisé aussi souvent que cela est nécessaire. La lèvre 56 peut également être soulevée seule lorsque l'on désire avoir un accès momentané à la feuillure 4 de la carrosserie.

Les profilés d'emboîtement et de fermeture sont de préférence réalisés par coextrusion des deux matières souple et rigide qui les composent ce qui assure leur cohésion et facilite l'addition éventuelle d'éléments décoratifs.

Bien entendu les matières peuvent être as semblés, si nécessaire, par d'autres procédés. Dans tous les cas toutefois l'adhérence de la couche 34 sur la branche 12 est telle qu'elle est retenue contre tout risque de soulèvement sous l'effet de l'écoulement de l'air extérieur, son prolongement au delà de la branche du profilé d'emboîtement étant très court.

On dispose ainsi d'un entourage pour vitre collée qui est facile à mettre en place et assure une fermeture étanche de l'espace entre la vitre de la feuillure de la carrosserie avec un encombrement relativement faible et en présentant un aspect esthétique. En outre, cet entourage peut être démonté pour permettre le retrait de la vitre et au moins partiellement réutilisé.

## Revendications

1. Entourage de vitre collée et notamment de vitre fixe de véhicule automobile, comportant un profilé d'emboîtement (8, 38) en matière organique dure, ayant une section U et muni d'une languette d'accrochage (14, 44) sensiblement parallèle à la base de ce U, et un profilé de fermeture (26, 52) qui comporte une tige d'accrochage (24, 54), s'emboîtant entre la languette (14, 44) et la base (16, 46) du U, et une lèvre de fermeture (28, 56) en une matière organique souple, caractérisé en ce que la branche extérieure (12) du profilé d'emboîtement est recouverte par une couche (34) de matière souple d'une seule seule pièce avec lui qui, d'une part, dépasse légèrement au-delà de l'extrémité de cette branche pour venir en appui étanche sur la vitre et, d'autre part, forme un épaulement (32) de contact étroit avec le bord (30) du profilé de fermeture et une surface externe de prolongement de celle de la lèvre de fermeture.

2. Entourage suivant la revendication 1, carctérisé en ce que la languette d'accrochage (14, 44) est reliée à la branche interne (10) du U par un bras élastique (18).

3. Entourage suivant l'une des revendications précédentes, caractérisé en ce que les faces en regard du profilé d'emboîtement (8, 38) et du profilé de fermeture (26, 52) ont des formes exactement complémentaires.

4. Entourage suivant l'une des revendications précédentes, caractérisé en ce que la languette d'accrochage (14) et la base (16) du profilé d'emboîtement (8) comportent des dents (20) inclinées vers l'intérieur afin de coopérer avec des dents analogues (22) de la tige d'accrochage (24).

5. Entourage suivant l'une des revendications 1 à 3, caractérisé en ce que la base (46) du profilé d'emboîtement (38) comporte entre deux surfaces parallèles lisses (50 et 42) une dent (48) de coopération avec une dent complémentaire (58) de la tige d'accrochage (54).

6. Entourage suivant la revendication 5, caractérisé en ce que la tige d'accrochage (54) comporte à son extrémité une lèvre souple (62) qui est repliée lors de l'introduction de la tige dans le profilé d'emboîtement et contribue au blocage des deux profilés l'un sur l'autre.

7. Entourage suivant l'une des revendications précédentes, caractérisé en ce que les profilés sont réalisés par coextrusion.

8. Entourage suivant l'une des revendications précédentes, caractérisé en ce que la surface externe du profilé de fermeture (26, 52) comporte des éléments décoratifs.

0249560

FIG.1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| D,Y | FR-A-2 565 621 (RENAULT)<br><br>* Figure 2; page 4, ligne 5 - page 5, ligne 24 * | 1-5,7,8 | B 60 R 13/06 |
| Y | FR-A-2 548 256 (VEITH PIRELLI)<br><br>* En entier * | 1-5,7,8 | |
| A | DE-A-1 903 732 (HOWARD CLAYTON-WRIGHT)<br>* Figure 4; page 8, ligne 11 - page 9, ligne 7 * | 1-3,8 | |
| A | DE-A-3 245 928 (GEBR. HAPPICH)<br>* Figures 1-3; page 6, ligne 6 - page 9, ligne 15 * | 1,7,8 | |
| A | DE-A-3 332 233 (VOLKSWAGENWERK)<br>* Figure; page 3, lignes 24-30 * | 1,2,5 | DOMAINES TECHNIQUES RECHERCHES (Int. Cl.4)<br><br>B 60 R |
| A | DE-A-3 333 672 (VOLKSWAGENWERK)<br>* Figures 2,3; page 4, lignes 11-15 * | 1-3,5 | |

Le présent rapport de recherche a été établi pour toutes les revendications

| Lieu de la recherche | Date d'achèvement de la recherche | Examinateur |
|---|---|---|
| LA HAYE | 18-09-1987 | DUBOIS B.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82